# EUROPEAN PATENT SPECIFICATION

(11) **EP 0 593 171 B1**
(45) Date of publication and mention of the grant of the patent: **11.09.1996**
(21) Application number: 93307526.9
(22) Date of filing: 23.09.1993
(51) Int. Cl.: C10G 11/18, B01J 8/24, B05B 7/04

(54) **Method for atomizing feedstock in a fluid catalytic cracking process**
Verfahren zur Zerstäubung von Beschickung in einem katalytischen Wirbelschicht-Krackverfahren
Méthode pour atomiser la charge dans un procédé de craquage catalytique en lit fluidisé

(30) Priority: 13.10.1992 US 960029
(43) Date of publication of application: 20.04.1994
(73) Proprietor: ABB LUMMUS GLOBAL INC., Bloomfield New Jersey 07003 (US)
(72) Inventor: Kaufman, Harold Carl, Houston, TX 77055 (US)
(74) Representative: Ben-Nathan, Laurence Albert

(56) References cited:
- EP-A- 0 220 349
- EP-A- 0 239 171
- EP-A- 0 241 966
- WO-A-92/17279
- US-A- 4 097 366

## Description

The invention relates to a fluid catalytic cracking (FCC) process for converting petroleum derived feedstocks to liquid fuel boiling range products. The invention more particularly relates to atomizing FCC feedstock. The invention most particularly relates to atomizing feedstock with an atomizing gas.

Fluid catalytic cracking processes are well known in the art. In the catalytic cracking process, liquid hydrocarbons such as vacuum gas oil, atmospheric residuum, deasphalted oil and combinations thereof are contacted with active cracking catalysts such as a crystalline alumina silicate at temperatures of from about 430°C to 760°C (800°F to 1400°F), preferably 450°C to about 570°C (850°F to about 1050°F) at pressures of about 1.4 x 10⁵ Pa to 3.1 x 10⁵ Pa (20 psia to 45 psia) for a period of time in the order of about 10 seconds or less, preferably 0.5 to 5 seconds to give a desired conversion. The process can utilize catalyst as a pellet in a moving bed, or powdered or microspherical catalyst using fluidized solid techniques. These cracking catalysts can consist of many types, however one group referred to as zeolite catalysts, are well known and commercially available. Higher boiling hydrocarbons such as vacuum gas oil are cracked using zeolite catalyst to produce lower boiling hydrocarbons with the relative product mix, including C₄ olefins and gasoline as well as the amount of carbonaceous matter deposited on catalyst, being determined by catalyst contact time, reactor conditions and feedstock composition.

It has been found that the liquid feed vaporization rate appears to be the most important, potentially limiting, physical factor in a fluidized catalytic cracking reactor. Optimum performance would be realized with an all vapor feed since the most desirable reactions occur in the vapor phase and require extremely rapid movement of reactants to and from active catalytic sites. However, preheating of the feedstock to completely vaporize the stock prior to injection into the reactor adversely affects process economics. When a substantially liquid feedstock is employed, the time required for vaporization of the feed droplets reduces the time available for the desired catalytic reactions thus tending to reduce feed conversion per pass with a consequent adverse effect on yield.

Thus, it has been found that the nature of the feed injection in the catalytic cracking reactor is critical. Essentially complete atomization of any unvaporized feed must be effected as fast and as close to the injection zone as possible.

Proper feed injection is less critical in a dense bed unit than in a transfer line reactor. In a dense bed unit, initial contact between oil and catalyst must be sufficient to generate a large volume of vapor by vaporization and cracking and to avoid forming large slugs of oil-wet catalyst. However, most of the cracking can occur in the dense bed where the contact time can be varied by changing the catalyst hold-up. Moreover, the reactor grid, if properly designed, provides good distribution and promotes good contacting. In a transfer-line reactor, however, the feed injection zone must provide both good contacting and a high degree of atomization. All conversion must be attained within the transfer-line reactor. Desirable cracking will not begin until the oil has been vaporized and well distributed. In a transfer line reactor, however, the total oil residence time is only on the order of about 1-7 seconds. Thus, the amount of time taken to achieve vaporization is critical. The more time taken for vaporization, the less time available for conversion.

It has also been found to be extremely beneficial to vaporize all feed almost completely in about one second or less by atomizing the liquid into droplets about 350 microns (micrometres) or less in diameter. With such a fine dispersion, the liquid does not have to come in direct contact with the solids for rapid vaporization. Heat flows rapidly by radiation and thermal conduction through vapor from the hot solids and evaporates the liquid droplets without direct contact with the catalyst.

To vaporize all feed, within these constraints, various atomization nozzles have been used. The nozzle described in U.S. Patent No. 2,747,936 by F. W. Wahlin is typical of impact plate and orifice nozzles used in the industry.

U.S. Patents 4,443,230 and 4,525,175 both to R. J. Stellaccio teach burners for the partial oxidation of slurries of solid fuel. The burners comprise concentric annular passages through which are separately passed the reaction components for the partial oxidation reaction.

Atomization of liquid fuels is discussed in Perry's Chemical Engineers' Handbook, 4th ed., pp 9-24 to 9-27. Atomization of liquid fuels is subdivided into external atomization, internal atomization and mechanical atomization.

In external atomization, oil is atomized by hitting a flowing oil stream with a perpendicular flow of an atomizing fluid. Steam may be used as the atomizing fluid in an amount of 0.1 to 8 kg of steam per kg of oil. Internal atomization is accomplished by mixing steam and oil together before flowing through an atomizer venturi.

Mechanical atomization is accomplished in its simplest application by forcing the oil under pressure through tangential slots in a sprayer plate to impart a rotating motion. The droplets leave the nozzle through an orifice. Droplet size is determined by the pressure drop across the sprayer plate.

Pressure drop is the primary control parameter in atomizers. Conventional atomizers have a pressure drop of 2.1 x 10⁵ Pa to 3.4 x 10⁵ Pa (30 to 50 psi) yielding 400 to 500 micron droplets. Commercial spiral tip atomizers, e.g. U. S. Patent 2,518,116 to J. U. Bete and U. S. Patent 4,514,291 to P. E. McGarry et al. (EP-A-126 445) exhibit pressure drops of 2.8 x 10⁵ Pa to 3.4 x 10⁵ Pa (40 to 50 psi) yielding 200 to 300 micron droplets. A spiral nozzle for the injection of hydrocarbon oil feed and steam in a fluid catalytic process is known from EP-A-220 349. Another commercially available atomizer comprises, an impact plate and orifice to cause a 1.4 x 10⁶ Pa to 2.1 x 10⁶ Pa (200 to 300 psi) pressure drop, yielding 125 to 175 micron droplets.

There is a need in the art for a method to atomize feedstock in the reaction zone of a fluid catalytic cracking (FCC) process with a controlled droplet size and distribution at a reasonably achievable pressure drop of 2.1 x 10⁵ Pa to 4.1 x 10⁵ Pa (30 to 60 psi).

The invention is a method for atomizing liquid hydrocarbon feedstock in a catalytic riser conversion zone, at a conversion zone pressure of 1.4 x 10⁵ Pa to 3.1 x 10⁵ Pa (20 psia to 45 psia) according to the attached claims 1 to 11. The liquid feedstock is formed into a first annular flow and a nozzle pressure applied of 2.1 x 10⁴ Pa to 2.1 x 10⁵ Pa (3 to 30 psi), preferably 2.1 x 10⁴ Pa to 6.9 x 10⁴ Pa (3 to 10 psi) above the conversion zone pressure. The liquid feedstock annular flow is impacted by both a first axial flow and a second annular flow of atomizing gas at specified angles. As a result the liquid hydrocarbon feedstock flow is reduced to 300 to 400 micron droplets.

Fig. 1 is a vertical section through a riser reactor and feedstock atomizer assembly.

Fig. 2 is a partial vertical section of an atomizer assembly.

Fig. 3 is a plot of data described in the Example.

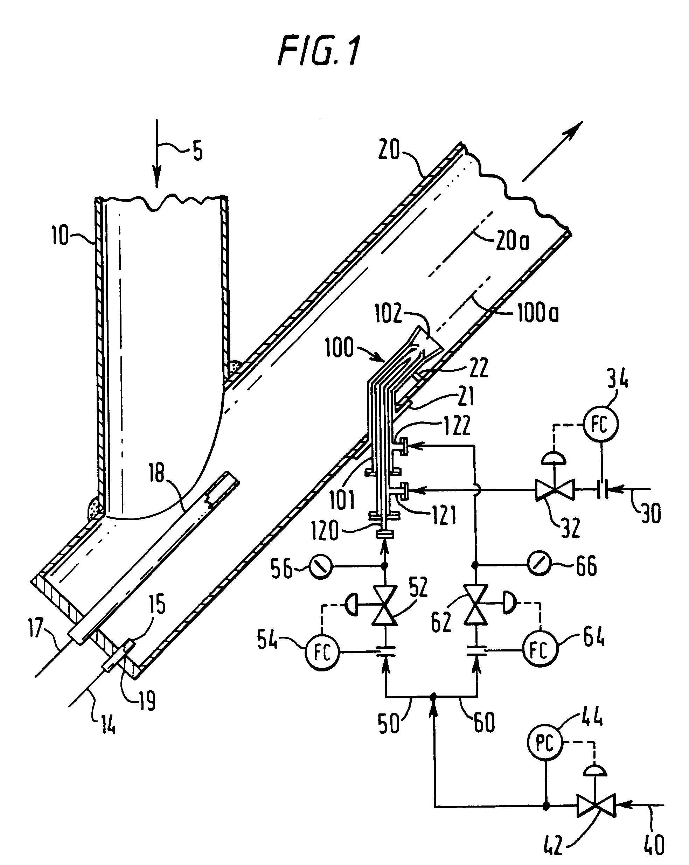

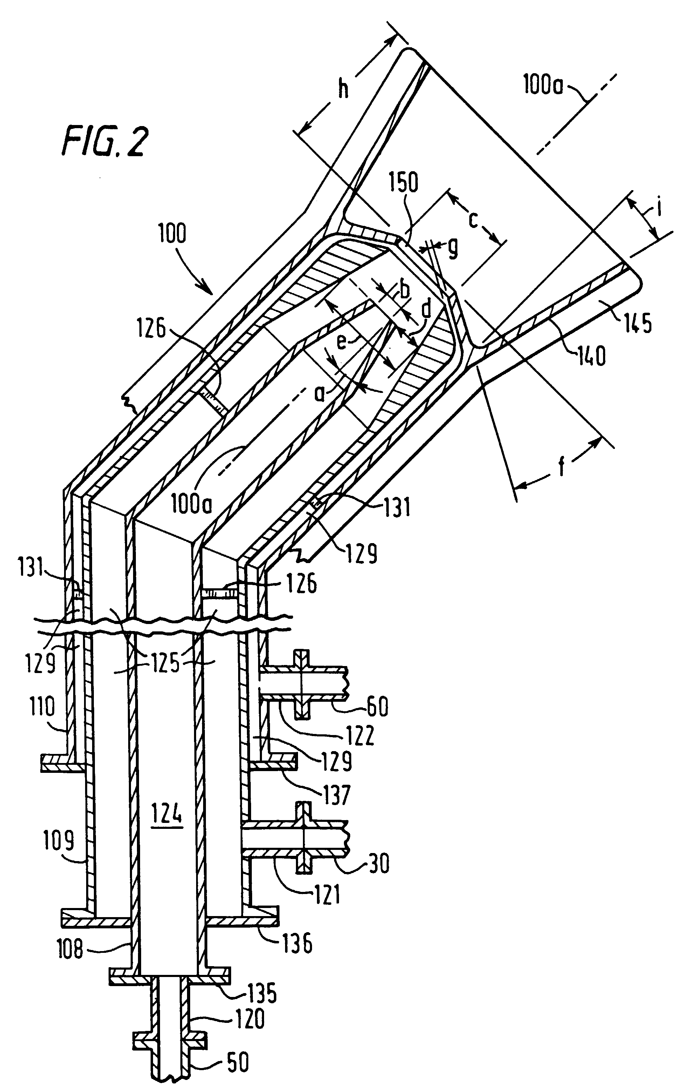

In order to demonstrate and provide a better understanding of the invention, reference is made to Figs. 1 and 2 which show the best mode contemplated by inventor for carrying out the invention.

It is to be understood that the drawings are only in such detail as required for a clear understanding of the invention, and that various elements commonly employed in commercial apparatus, such as valves, pumps and instruments which are unnecessary for a description of the invention have been omitted for the sake of clarity.

In Fig. 1 a clean, freshly regenerated catalyst flowing as shown by direction arrow 5 is delivered from regenerated catalyst standpipe 10 into the initial or lower portion of riser reactor 20. The regenerated catalyst has a carbon content less than about 0.1 wt% and an ASTM microactivity of 55 to 80. As the catalyst enters riser reactor 20, its temperature is increased by addition of fluidization medium delivered as shown through pipe 17 entering riser 20 via bayonet 18 located in the bottom head 19 of riser reactor 20. The fluidization medium may be steam, nitrogen or low molecular weight hydrocarbons such as methane, ethane or ethylene. The amount of fluidization medium must be sufficient to fluidize the zeolite catalyst in the lower portion of riser reactor 20 above the minimum fluidization velocity to move the catalyst upward toward feedstock atomizer 100. In transient operation, purge medium such as fluidization medium, especially steam, is introduced into riser reactor 20 through pipe 14 into riser reactor 20 via nozzle 15 also mounted in bottom head 19.

Atomizer 100 comprises an upstream end 101 and a downstream end 102. Atomizer 100 is installed with downstream end 102 in direct contact with fluidized catalyst in the catalytic riser conversion zone of riser reactor 20. The longitudinal central axis 100a of downstream end 102 is aligned parallel with the longitudinal central axis 20a of riser reactor 20. The atomizer 100 is attached to riser reactor 20 by means of a mounting flange 21 and support 22. Mounting flange 21 may alternatively be attached to bottom head 19, with axes 20a and 100a parallel.

Hot regenerated catalyst is contacted with atomized feedstock injected into riser reactor 20 via atomiser 100. Atomization of feedstock allows for the close contacting of feedstock with catalyst and as a result the catalytic cracking of feedstock to liquid boiling range fuel and lighter hydrocarbons takes place. The entire internal volume of riser reactor 20 comprises a catalytic riser conversion zone for the contacting of atomized feedstock and the carrying out of the catalytic reactions.

Liquid feedstock flows via pipe 30 under flow control through control valve 32. The flow rate of feedstock is measured by flow controller 34. The combination of control valve 32 and flow controller 34 comprise a feedback control loop for maintaining a steady flow rate of feedstock to atomizer 100. Liquid feedstock enters atomizer 100 via inlet 121 attached to middle conduit 109 and provides fluid communication with a middle annular passage 125. Middle conduit 109 and annular passage 125 are shown in Fig. 2.

The liquid feedstock is atomized by means of an atomizing gas. The atomizing gas impacts the continuous flowing liquid feedstock and continuously cuts or shears off the feedstock into small, thin sheets which coalesce by the action of surface tension into droplets of average diameter 400 microns or less. The amount of atomizing gas required to accomplish the atomization is 1 wt% to 5 wt% of the feedstock.

The atomizing gas impacts the annular flow of liquid feedstock on both continuous surfaces. The inner flowing surface is impacted by the first axial flow of gas at an impact angle of 5° to 45°. The outer flowing surface is impacted by the second angular flow of gas at an impact angle of 15° to 90°. The volume between the impact of the first axial flow of gas and second annulus flow of gas is shown in Fig. 2 as atomization zone 150 and is a zone of turbulent mixing.

The atomizing gas is preferably, inert to chemical change in the catalytic riser conversion zone. The preferred atomising gas based on compatibility with downstream separation and processing are steam, methane, ethane, ethylene, propane, butane, butylene and mixtures thereof. Mixtures may include fuel gas (refinery gas) which is a mixture of hydrogen, methane, ethane, ethylene and other light hydrocarbon vapors and natural gas which is a mixture of methane and ethane. Mixtures of these hydrocarbon gases with steam is also useful. Steam is effective, preferably steam at 6.2 x 10⁵ Pa to 1.4 x 10⁶ Pa (90 to 200 psig).

The atomizing gas flows via pipe 40 under pressure control through control valve 42. The pressure of feedstock is measured by pressure controller 44. The combination of control valve 42 and pressure controller 44 comprises a feedback control loop for maintaining a constant steam pressure, e.g. 8.6 x 10⁵ Pa (125 psig).

The flow of atomizing gas in pipe 40 is divided into flow in pipe 50 and pipe 60. Pipe 50 provides atomizing gas to inlet 120. Inlet 120 is attached to a central cylindrical conduit 108 and provides fluid communication with a central cylindrical passage 124. Central cylindrical conduit 108 and central cylindrical passage 124 are shown in Fig. 2. Atomizing gas flows through pipe 50 under flow control provided by control valve 52 and flow controller 54 which together form a feedback control loop. The pressure of atomizing gas flowing through pipe 50 is measured by pressure indicator 56.

Pipe 60 provides atomizing gas to inlet 122 of atomizer 100. Inlet 122 is attached to an outer concentric cylindrical conduit 110 and provides fluid communication with an outer concentric annular passage 129. Outer concentric cylindrical conduit 110 and outer concentric annular passage 129 are shown in Fig. 2. Atomizing gas flows through pipe 60 under flow control provided by control valve 62 and flow controller 64 which together form a feedback control loop. The pressure of atomizing gas flowing through pipe 60 is measured by pressure indicator 66.

Reference is made to Fig. 2. Atomizer 100 having longitudinal central axis 100a comprises central cylindrical conduit 108 and middle 109 and outer 110 concentric cylindrical conduits. Flanged pipes 50, 30 and 60 for the feedstock and atomizing gas to the atomizer 100 are connected to central cylindrical conduit 108 and concentric cylindrical conduits 109 and 110 respectively.

The atomizer 100 has three unobstructed passages for the free flow of feedstock and atomizing gas. The passages are formed by radially spacing the three conduits. Thus the middle passage 125 is located between the outside diameter of central conduit 108 and the inside diameter of middle conduit 109. The radial spacing between the central and middle conduits is maintained by wall spacers 126.

Outer annular passage 129 is located between the outside diameter of middle conduit 109 and the inside diameter of outer conduit 110. Wall spacers 131 maintain the radial spacing between the second conduit 109 and the outer conduit 110.

At the upstream end 101 of atomiser 100 the upstream end of each conduit and annular passage is closed off. Cover plates 135, 136 and 137 seal off the upstream ends of central cylindrical passage 124, middle annular passage 125, and outer annular passage 129 respectively. Conventional means such as flanging, welding or threading may be used to secure the cover plate to the ends of the conduit. Gaskets may be used to provide a leak proof seal.

At the downstream end of the atomizer 100, the outside diameter of central cylindrical conduit 108 is reduced. This is achieved by forming the wall inwardly at an angle a. The wall extends a distance which reduces conduit 108 to an outlet diameter b.

The outside diameter of middle conduit 109 is also reduced at the downstream end of atomizer 100 to a diameter c. The inside diameter of middle conduit 109 is reduced by increasing the thickness of the conduit 109 wall. The conduit wall thickness is increased proportional to the inside wall of conduit 109 to create angle a. This results in a uniform annular flow passage of annular width d resulting from a conduit 109 diameter of e.

The downstream end of the outside diameter of outer conduit 110 is reduced. This is achieved by forming the wall inwardly at an angle f. This angle f allows for an annular flow passage of width g between the outside diameter of conduit 109 and the inside diameter of conduit 110.

A tip shield 140 is fastened to the outside surface of outer conduit 110 to prevent impingement erosion by catalyst at the downstream end 102 of the atomizer 100. The tip shield 140 extends a distance h which assists in the unimpeded and outward flow of atomized liquid from the atomizer. The tip shield 140 may be fastened to outer conduit 110 at a diverging angle i to the outer conduit to avoid impingement by atomized liquid. A diverging tip shield reduces the velocity of atomized feedstock to reduce attrition of catalyst caused by contact at different velocities.

Finally the external surfaces of atomizer 100 which are exposed to catalyst impingement in riser reactor 20 are coated with a refractory shield 145 to prevent erosion.

This invention is shown by way of Example.

### EXAMPLE 1

An atomizer is assembled according to Fig. 2. The atomizer conduits, inlets and conduits are made substantially of 9 chrom-1-moly steel. The conduit discharge surfaces are coated with an erosion resistant coating such as Stellite or the equivalent. The refractory is Gunnite.

The atomizer is designed to pass 7950 m³/day (50,000 bbl/day) of liquid hydrocarbon feedstock through second passage 125. Central passage 124 and outer passage 129 are designed to accommodate 8.6 x 10⁵ Pa (125 psig) steam in an amount of 1 wt% of the feedstock. Forty percent of the steam will pass through central passage 124 with the balance flowing through outer passage 129.

The conduit dimensions are specified as follows:

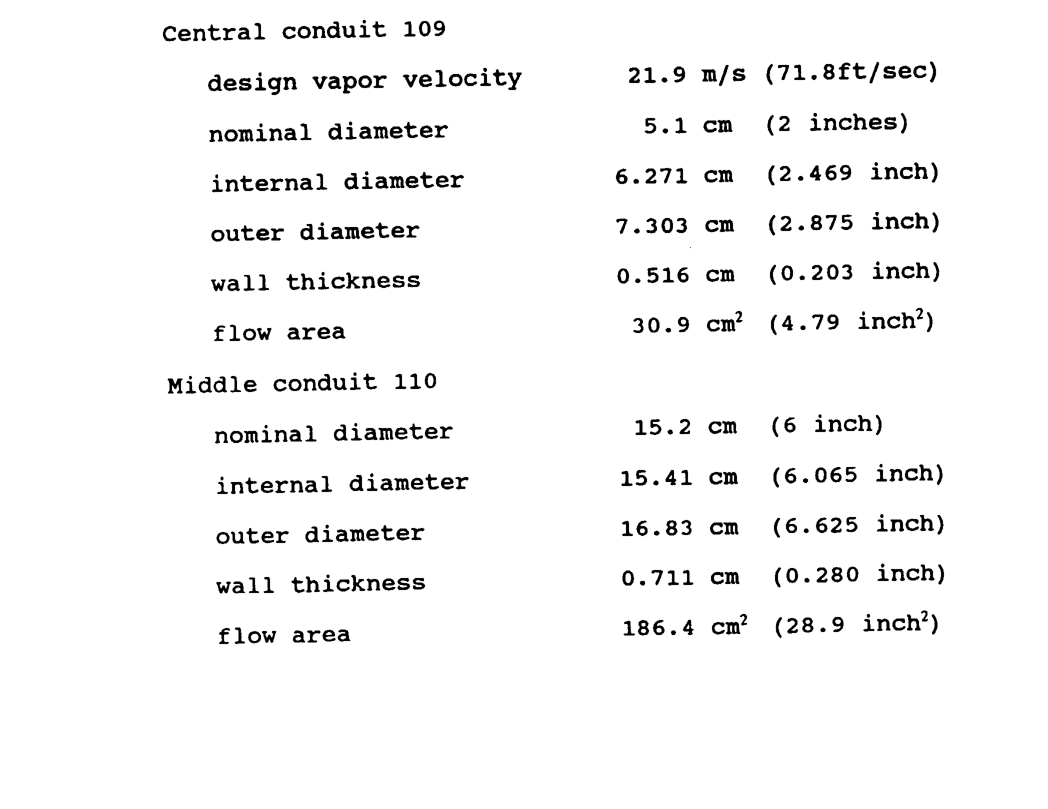

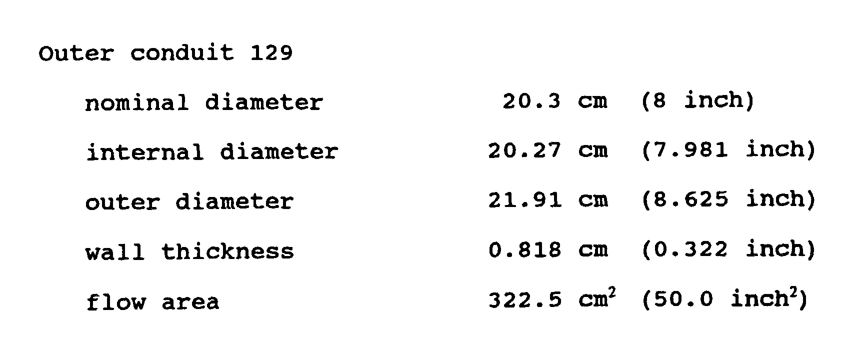

The atomizer downstream end 102 passage dimensions are specified as follows:

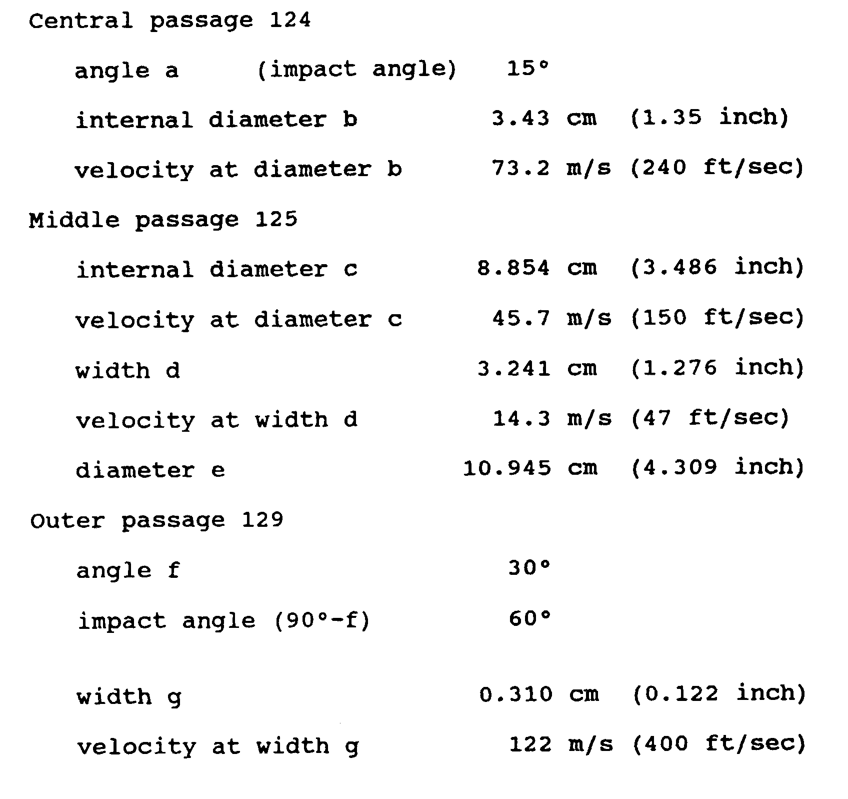

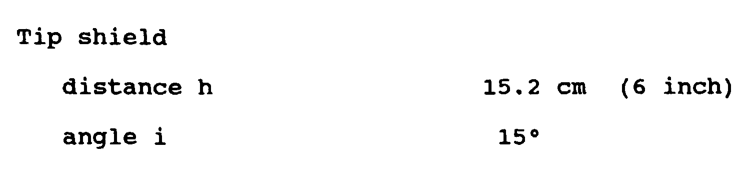

The atomizer 100 is installed in a riser reactor 20 according to Fig. 2. The design operating point, full range of operation and typical operating conditions are as follows:

| | **Design** | **Range** | **Typical** |
|---|---|---|---|
| Atomizer 100 pressure drop, | 1.4 | 0.2-2.1 | 1.0 |
| Pascal x 10⁻⁵ (psi) | (20 | 3-30 | 15) |
| | | | |
| Feedstock velocity at width d, m/s | 15 | 7.6-18 | 15 |
| (ft/sec) | (50 | 25-60 | 50) |
| | | | |
| Steam velocity at diameter b, m/s | 73 | 61-92 | 44 |
| (ft/sec) | (240 | 200-300 | 144) |
| | | | |
| Steam velocity at width g, m/s | 122 | 61-153 | 73 |
| (ft/sec) | (400 | 200-500 | 240) |
| | | | |
| Atomized feedstock - steam bulk velocity, at diameter c, m/s | 46 | 24-92 | 40 |
| (ft/sec) | (150 | 80-300 | 130) |
| | | | |
| Steam to conduits 108 and 110, | 2.5 | 1-5 | 1.5 |
| wt% of feedstock to conduit 109 | | | |
| | | | |
| Steam to conduit 108, | 40 | 10-50 | 24 |
| vol% of steam to 108 and 110 | | | |
| | | | |
| Bayonet 18, steam velocity, m/s | 21 | 12-31 | 13 |
| (ft/sec) | (70 | 40-100 | 42) |

### EXAMPLE 2

Atomization nozzles were mounted in a bench testing unit. The atomizers were tested for use in atomizing feedstock in a fluid catalytic cracking (FCC) riser reactor. The parameters which determine the atomizer's utility for a FCC riser is the median droplet size of droplets produced and the pressure drop across the atomizer. Conventional atomizers used in FCC service produce a median droplet size of 250 to 400 microns at 2.1 x 10⁵ Pa to 3.4 x 10⁵ Pa (30 to 50 psi) pressure drop.

A small spiral nozzle, according to U.S. Patent 4,514,291 to P. E. McGarry et al. was tested. The small spiral atomizer requires a relatively high pressure drop of 2.8 x 10⁵ Pa to 3.4 x 10⁵ Pa (40 to 50 psi).

A three stream nozzle, according to the invention, was tested in a cold flow air/water simulation. Liquid water simulated liquid hydrocarbon feedstock and air was used to simulate steam as the atomizing gas. In one configuration the central conduit/outer conduit air distribution was 60%/40%.
In the other configuration the distribution was 80%/20%.

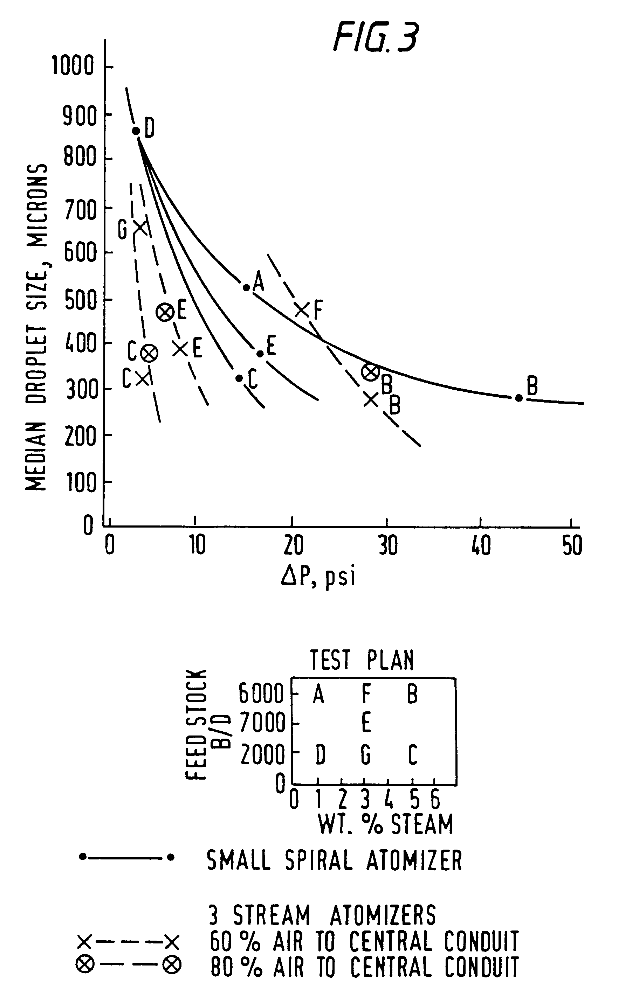

The nozzles were tested according to the Test Plan. Feedstock droplet size and atomizer pressure drop were measured at the test points A-G corresponding with conventional feedstock-steam mixes. The results of the testing were plotted in Fig. 3.

At a liquid water rate corresponding to 950 m³/day (6000 bbl/day) (B/D) liquid hydrocarbon feedstock, the three stream atomizer produced the same median droplet size as the spiral tip atomizer (280 microns and 290 microns) respectively. The 3-stream atomizer pressure drop was 1.9 x 10⁵ Pa (28 psi). The spiral atomizer pressure drop was 3.0 x 10⁵ Pa (44 psi).

For the spiral atomizer, the droplet size did not appreciably decrease when the pressure drop was increased. For the three stream nozzle increased pressure drop produced smaller droplets. The data of interest is reduced to tabular form:

| | | **Test Point B** | **Test Point C** | **Test Point E** |
|---|---|---|---|---|
| | | ΔP | ΔP | ΔP |
| Comparative (U.S. 4,514,291) | Pa x 10⁻⁵ (psi) | 3.0 | 1.0 | 1.2 |
| | | (43 | 15 | 18) |
| Inventive | Pa x 10⁻⁵ (psi) | 2.0 | 0.2 | 0.6-0.7 |
| | | (29 | 3 | 8-10) |

At test points A and D the three stream atomizer produced droplets too large to measure. Though not shown on Fig. 3 the three stream atomizer produced poor droplet size at low steam rates and low feedstock rates.

While particular embodiments of the invention have been described, it will be understood, of course, that the invention is not limited thereto since many modifications may be made, and it is, therefore, contemplated to cover by the appended claims any such modification as fall within the and scope of the invention.

## Claims

1. A method for introducing a liquid hydrocarbon feedstock (30) into a catalytic riser conversion zone (20), characterised by:
forming a first axial flow (124) of atomizing gas (50),
forming a first annular flow (125) of said liquid hydrocarbon feedstock (30) coaxial with said first axial flow of gas (124), said first annular (125) flow (125) having an applied nozzle pressure about 2.1 x 10⁴ Pa to 2.1 x 10⁵ Pa (3 to 30 psi) above the pressure in said conversion zone;
forming a second annular flow (129) of atomizing gas (60) coaxial with said first axial flow (124) of gas and said first annular flow (125) of liquid, and
impacting said first annular flow (125) with both said first axial flow (124) and said second annular flow (129) in an atomization zone (150) within said catalytic riser conversion zone (20) wherein the impact by said first axial flow (124) is at an impact angle of 5° to 45° and by said second annular flow (129) is at an impact angle of 15° to 90°, thereby forming liquid hydrocarbon feedstock droplets in the size range of 300 to 400 micrometres.

2. A method according to Claim 1 characterised in that the pressure in said conversion zone is in the range 1.4 x 10⁵ Pa to 3.1 x 10⁵ Pa (20 psia to 45 psia).

3. A method according to Claim 1 or Claim 2 characterised in that the nozzle pressure is 2.1 x 10⁴ Pa to 6.9 x 10⁴ Pa (3 to 10 psi) above the conversion zone pressure.

4. A method according to any one of Claims 1 to 3 characterised in that the impact of said liquid flow (125) by said first atomizing gas flow (124) is at an impact angle of 5° to 25° and by said second atomizing gas flow (129) at an impact angle of 15° to 45°.

5. A method according to any one of Claims 1 to 4 characterised in that the amount of atomizing gas comprises 1 to 5 weight % of the feedstock.

6. A method according to any one of Claims 1 to 5 characterised in that the atomizing gas is at a pressure of 6.2 x 10⁵ Pa to 1.4 x 10⁶ Pa (90 to 200 psig).

7. A method according to any one of Claims 1 to 6 characterised in that the atomizing gas is steam, methane, ethane, ethylene, propane, propylene, butane, butylene or any mixture thereof.

8. A method according to any one of Claims 1 to 7 characterised in that said feedstock is introduced by means of an atomizer comprising radially spaced concentric central (108), middle (109) and outer (110) conduits providing respectively a central (124) cylindrical passage and middle (125) and outer (129) concentric annular passages, said conduits having closed upstream ends (135,136,137) with inlets (120,121,122) providing fluid communication with said passages (124,125,129) and open downstream ends with exit orifices providing fluid communication between said passages (124,125,129) and said catalytic riser conversion zone (20);
passing the liquid feedstock (30) through said middle annular passage (125) at a velocity in the range of 0.9 m/s to 30 m/s (3 to 100 ft/sec.);
simultaneously passing the atomizing gas (50,60) through both the central cylindrical passage (124) and the annular outer passage (129) at a velocity in the range of about 0.9 m/s (3 ft/sec.) to sonic velocity.

9. A method according to Claim 8 characterised in that the velocity of the feedstock in the second annular passage (129) is 7.6 m/s to 18 m/s (25 to 60 ft/sec.).

10. A method according to Claim 8 or Claim 9 characterised in that the velocity of atomizing gas at the exit orifices is 60 m/s to 150 m/s (200 to 500 ft/sec.).

11. A method according to any one of Claims 8 to 10 characterised in that 10 to 50 vol% of the atomizing gas (50) passes through the central cylindrical conduit (124) and the balance (30) passes through the outer annular conduit (129).

## Patentansprüche

1. Ein Verfahren zum Einleiten einer flüssigen Kohlenwasserstoffcharge (30) in eine katalytische Steigrohrumwandlungszone (20), gekennzeichnet durch:
Ausbilden einer ersten axialen Strömung (124) eines Zerstäubungsgases (50),
Ausbilden einer ersten ringförmigen Strömung (125) der flüssigen Kohlenwasserstoffcharge (30) koaxial zu der ersten axialen Gasströmung (124), wobei die erste ringförmige Strömung (125) einen Düsenbetriebsdruck von 2,1 x 10⁴ Pa bis 2,1 x 10⁵ Pa (3 bis 30 psi) über dem Druck in der Umwandlungszone aufweist;
Ausbilden einer zweiten ringförmigen Strömung (129) eines Zerstäubungsgases (60) koaxial zu der ersten axialen Gasströmung (124) und der ersten ringförmigen Flüssigkeitsströmung (125), und
Auftreffenlassen sowohl der ersten axialen Strömung (124) als auch der zweiten ringförmigen Strömung (129) auf die erste ringförmige Strömung (125) in einer Zerstäubungszone (150) innerhalb der katalytischen Steigrohrumwandlungszone (20), wobei das Auftreffen der ersten axialen Strömung (124) unter einem Auftreffwinkel von 5 bis 45° und der zweiten ringförmigen Strömung (129) unter einem Auftreffwinkel von 15° bis 90° stattfindet, wodurch Tröpfchen der flüssigen Kohlenwasserstoffcharge in dem Größenbereich von 300 bis 400 µm gebildet werden.

2. Ein Verfahren nach Anspruch 1, dadurch gekennzeichnet, daß der Druck in der Umwandlungszone in dem Bereich von 1,4 x 10⁵ Pa bis 3,1 x 10⁵ Pa (20 psia bis 45 psia) liegt.

3. Ein Verfahren nach Anspruch 1 oder 2, dadurch gekennzeichnet, daß der Düsendruck 2,1 x 10⁴ Pa bis 6,9 x 10⁴ Pa (3 bis 10 psi) über dem Umwandlungszonendruck beträgt.

4. Ein Verfahren nach irgendeinem der Ansprüche 1 bis 3, dadurch gekennzeichnet, daß das Auftreffen der ersten Zerstäubungsgasströmung (124) auf die flüssige Strömung (125) unter einem Auftreffwinkel von 5° bis 25° und der zweiten Zerstäubungsgasströmung (129) unter einem Auftreffwinkel von 15° bis 45° stattfindet.

5. Ein Verfahren nach irgendeinem der Ansprüche 1 bis 4, dadurch gekennzeichnet, daß die Menge von Zerstäubungsgas 1 bis 5 Gew.-% der Charge umfaßt.

6. Ein Verfahren nach irgendeinem der Ansprüche 1 bis 5, dadurch gekennzeichnet, daß das Zerstäubungsgas unter einem Druck von 6,2 x 10⁵ Pa bis 1,4 x 10⁶ Pa (90 bis 200 psig) steht.

7. Ein Verfahren nach irgendeinem der Ansprüche 1 bis 6, dadurch gekennzeichnet, daß das Zerstäubungsgas Dampf, Methan, Ethan, Ethylen, Propan, Propylen, Butan, Butylen oder irgendeine Mischung derselben ist.

8. Ein Verfahren nach irgendeinem der Ansprüche 1 bis 7, dadurch gekennzeichnet, daß die Charge mittels eines Zerstäubers eingeleitet wird, der radial beabstandet konzentrische zentrale (108), mittlere (109) und äußere (110) Rohre umfaßt, die jeweils einen zentralen (124) zylindrischen Durchgang und mittlere (125) und äußere (129) konzentrische ringförmige Durchgänge liefern, wobei die Rohre abgesperrte stromaufwärtige Enden (135, 136, 137) mit Einlässen (120, 121, 122), die eine Fließverbindung mit den Durchgängen (124, 125, 129) liefern, und offene stromabwärtige Enden mit Austrittsöffnungen aufweisen, die eine Fließverbindung zwischen den Durchgängen (124, 125, 129) und der katalytischen Steigrohrumwandlungszone (20) liefern;
Leiten der flüssigen Charge (30) durch den mittleren ringförmigen Durchgang (125) bei einer Geschwindigkeit im Bereich von 0,9 m/s bis 30 m/s (3 bis 100 ft/sec);
simultanes Leiten des Zerstäubungsgases (50, 60) durch den zentralen zylindrischen Durchgang (124) und den ringförmigen äußeren Durchgang (129) mit einer Geschwindigkeit im Bereich von ungefähr 0,9 m/s (3 ft/sec.) bis Schallgeschwindigkeit.

9. Ein Verfahren nach Anspruch 8, dadurch gekennzeichnet, daß die Geschwindigkeit der Charge in dem zweiten ringförmigen Durchgang (129) 7,6 m/s bis 18 m/s (25 bis 60 ft/sec.) beträgt.

10. Ein Verfahren nach Anspruch 8 oder Anspruch 9, dadurch gekennzeichnet, daß die Geschwindigkeit des Zerstäubungsgases an den Austrittsöffnungen 60 m/s bis 150 m/s (200 bis 500 ft/sec.) beträgt.

11. Ein Verfahren nach irgendeinem der Ansprüche 8 bis 10, dadurch gekennzeichnet, daß 10 bis 50 Vol.-% des Zerstäubungsgases (50) durch das zentrale zylindrische Rohr (124) und der Rest (60) durch das äußere ringförmige Rohr (129) tritt.

## Revendications

1. Méthode d'introduction d'une charge d'alimentation d'hydrocarbures liquides (30) dans une zone catalytique de conversion à colonne montante (20), caractérisée par:
la formation d'un premier flot axial (124) d'un gaz atomisant (50),
la formation d'un premier flot annulaire (125) de ladite charge d'alimentation d'hydrocarbures liquides (30), coaxial avec ledit premier flot axial de gaz (124), ledit premier flot annulaire (125) ayant une pression appliquée de buse d'environ 2,1 × 10⁴ Pa à 2,1 × 10⁵ Pa (3 à 30 livres par pouce au carré) au-dessus de la pression dans ladite zone de conversion;
la formation d'un deuxième flot annulaire (129) de gaz atomisant (60), coaxial avec ledit premier flot axial (124) de gaz et ledit premier flot annulaire (125) de liquide, et,
l'impact dudit premier flot annulaire (125) avec tout à la fois ledit premier flot axial (124) et ledit deuxième flot annulaire (129) dans une zone d'atomisation (150) au sein de ladite zone catalytique de conversion à colonne montante (20), dans laquelle l'impact par ledit premier flot axial (124) se fait sous un angle d'impact de 5° à 45° et l'impact par ledit deuxième flot annulaire (129) se fait sous un angle d'impact de 15° à 90°, en formant ainsi des gouttelettes de charge d'alimentation d'hydrocarbures liquides dans la gamme de taille de 300 à 400 micromètres.

2. Méthode selon la revendication 1, caractérisée en ce que la pression dans ladite zone de conversion est dans la gamme de 1,4 × 10⁵ Pa à 3,1 × 10⁵ Pa (pression absolue de 20 à 45 livres par pouce au carré).

3. Méthode selon la revendication 1 ou la revendication 2, caractérisée en ce que la pression de buse est de 2,1 x 10⁴ Pa à 6,9 x 10⁴ Pa (3 à 10 livres par pouce au carré) au-dessus de la pression de zone de conversion.

4. Méthode selon l'une quelconque des revendications 1 à 3, caractérisée en ce que l'impact dudit flot liquide (125) par ledit premier flot de gaz atomisant (124) se fait sous un angle d'impact de 5° à 25°, et en ce que l'impact par ledit deuxième flot de gaz atomisant (129) se fait sous un angle d'impact de 15° à 45°.

5. Méthode selon l'une quelconque des revendications 1 à 4, caractérisée en ce que la quantité de gaz atomisant comprend de 1 à 5 % en poids de la charge d'alimentation.

6. Méthode selon l'une quelconque des revendications 1 à.5, caractérisée en ce que le gaz atomisant est à une pression de 6,2 × 10⁵ Pa à 1,4 × 10⁶ Pa (pression manométrique de 900 à 200 livres par pouce au carré).

7. Méthode selon l'une quelconque des revendications 1 à 6, caractérisée en ce que le gaz atomisant est de la vapeur d'eau, du méthane, de l'éthane, de l'éthylène, du propane, du propylène, du butane, du butylène ou un mélange quelconque de ceux-ci.

8. Méthode selon l'une quelconque des revendications 1 à 7, caractérisée en ce que ladite charge d'alimentation est introduite à l'aide d'un atomiseur comprenant des conduits central (108), médian (109) et externe (110) concentriques, espacés radialement, mettant à disposition respectivement un passage cylindrique central (124) et des passages annulaires concentriques médian (128) et externe (129), lesdits conduits ayant des extrémités fermées en amont (135, 136, 137), avec des entrées (120, 121, 122) permettant une communication fluidique avec lesdits passages (124, 125, 129), et des extrémités ouvertes en aval avec des orifices de sortie, permettant une communication fluidique entre lesdits passages (124, 125, 129) et ladite zone catalytique de conversion à colonne montante (20);
par le passage de la charge d'alimentation liquide (30) à travers ledit passage annulaire médian (125) à une vitesse dans le domaine de 0,9 m/s à 30 m/s (3 à 100 pieds par seconde);
et par le passage simultané du gaz atomisant (50, 60) à travers tout à la fois le passage cylindrique central (124) et le passage annulaire externe (129) à une vitesse dans le domaine d'environ 0,9 m/s (3 pieds par seconde) à la vitesse du son.

9. Méthode selon la revendication 8, caractérisée en ce que la vitesse de la charge d'alimentation dans le deuxième passage annulaire (129) est de 7,6 m/s à 18 m/s (25 à 60 pieds par seconde).

10. Méthode selon la revendication 8 ou la revendication 9, caractérisée en ce que la vitesse du gaz atomisant aux orifices de sortie est de 60 m/s à 150 m/s (200 à 500 pieds par seconde).

11. Méthode selon l'une quelconque des revendications 8 à 10, caractérisée en ce que de 10 à 50 % en volume du gaz atomisant (50) passe à travers le conduit cylindrique central (124) et le reste (30) passe à travers le conduit annulaire externe (129).
